# FASCICULE DE BREVET EUROPEEN

(11) **EP 3 809 544 B1**
(45) Date de publication et mention de la délivrance du brevet: **09.11.2022**
(21) Numéro de dépôt: 20197122.3
(22) Date de dépôt: 21.09.2020
(51) Int. Cl.: H02B 1/34, H05K 7/18, H02B 1/32, H02B 1/28

(54) **SYSTEME DE VERROUILLAGE DU DEPLACEMENT D'UN SUPPORT DE COMPOSANTS ELECTRIQUE D'UNE ARMOIRE, NOTAMMENT ATEX ET ARMOIRE MUNIE D'UN TEL SUPPORT**
SYSTEM ZUM VERRIEGELN DER BEWEGUNG EINER HALTERUNG FÜR ELEKTRISCHE KOMPONENTEN IN EINEM SCHALTSCHRANK, INSBESONDERE EINEM ATEX-ZERTIFIZIERTEN SCHALTSCHRANK, UND SCHALTSCHRANK, DER MIT EINER SOLCHEN HALTERUNG AUSGESTATTET IST
SYSTEM FOR LOCKING THE MOVEMENT OF A SUPPORT FOR ELECTRICAL COMPONENTS OF A CABINET, IN PARTICULAR ATEX, AND A CABINET EQUIPPED WITH SUCH A SUPPORT

(30) Priorité: 16.10.2019 FR 1911514
(43) Date de publication de la demande: 21.04.2021
(73) Titulaire: CHLORIDE, 69680 Chassieu (FR)
(72) Inventeur: NGUYEN, Minh Man, 69200 VENISSIEUX (FR); JUILLARD, Arnaud, 01480 ARS SUR FORMANS (FR); BOIREAU, Christian, 69370 SAINT DIDIER AU MONT D'OR (FR)
(74) Mandataire: Cabinet Laurent & Charras

(56) Documents cités:
- CN-A- 108 512 069
- CN-A- 109 980 546
- CN-U- 207 967 719
- DE-C1- 3 906 949
- FR-A1- 2 594 265

## Description

### DOMAINE DE L'INVENTION

La présente invention concerne le domaine technique des armoires électriques, plus particulièrement destinées aux applications en milieux à risques. Par milieux à risques, on entend notamment les zones, principalement industrielles, à risques classés soumises à la réglementation ATEX.

Elle concerne plus particulièrement une armoire électrique mettant en œuvre un système de verrouillage du déplacement d'un support comprenant des composants électriques.

### ART ANTERIEUR

Les armoires électriques destinées à fonctionner dans des milieux à risques sont généralement conçues de manière à définir une enceinte à atmosphère étanche et antidéflagrante. De telles armoires reçoivent des composants électriques, généralement fixés ou rapportés sur un ou plusieurs supports, et connectés à des câbles électriques acheminés à l'intérieur de l'enceinte.

En raison même du principe de confinement sous-tendant le fonctionnement de telles armoires, l'accessibilité au sein de l'enceinte est relativement réduite, rendant délicates voire pénibles les opérations tant d'installation ou de montage des composants électriques ou électroniques au sein de l'enceinte que de maintenance.

Par ailleurs, toujours en raison du volume relativement réduit de l'enceinte de confinement, l'intervention des opérateurs de maintenance peut s'avérer dangereuse en termes de sécurité électrique, nonobstant les dispositifs de sécurité mis en place.

Parmi les dispositifs connus à ce jour, une solution consiste à fixer le rack ou support des composants électrique dans l'armoire, en particulier sur l'ossature interne, c'est-à-dire la structure au niveau de laquelle sont reçus les différents supports de composants électriques. L'ossature interne, présentant une forme parallélépipédique, est vissée au sein de l'enveloppe interne de l'armoire.

Cette solution engendre cependant une perte de temps notable pour les opérateurs chargés de la maintenance. En effet pour accéder aux composants électriques, il est dans ce cas nécessaire de démonter le rack hors de l'ossature interne, afin de pouvoir procéder aux opérations de maintenance nécessaires, puis de le remonter sur ladite ossature interne.

CN108512069 A décrit une armoire pour milieux à risques selon le préambule de la revendication 1. CN 109 980 546 A, DE 39 06 949 C1 et CN 207 967 719 U décrivent des armoires électriques qui ne sont pas destinées aux milieux à risques et qui comprennent des composants électriques montés sur une platine, ladite platine étant montée coulissante sur des rails de guidage fixés sur les parois latérales de l'armoire.

En résumé, il n'existe pas à ce jour de solutions techniques adaptées pour résoudre ces différentes difficultés, alliant à la fois l'accessibilité au sein de telles armoires, et les conditions optimum de sécurité des intervenants.

### EXPOSE DE L'INVENTION

L'invention propose une armoire électrique, destinée aux milieux à risques, dont la conception permet un accès facilité aux différents composants électriques qu'elle est destinée à contenir, de sorte à faciliter les opérations de maintenance.

L'objectif de l'armoire électrique selon l'invention qui est définie par la revendication 1 est de faciliter l'accès aux composants électriques, malgré la pression ou stress généré par les câbles électriques au dos de la platine - support de ces composants, tout en ne conservant qu'une seule ouverture de l'armoire et ainsi préserver le caractère étanche et antidéflagrant de l'enceinte.

Afin de résoudre les problèmes précités, l'invention consiste tout d'abord à monter ladite platine support des composants électriques sur des glissières latérales, de telle sorte à permettre, à l'instar d'un tiroir, de tirer à volonté la platine considérée hors de l'armoire, et ainsi avoir accès aux composants concernés. L'accès aux composants électriques de la platine est alors facilité puisqu'il est possible de faire coulisser le rack le long desdites glissières.

Cependant, les câbles électriques débouchant dans l'armoire et connectés aux différents composants montés sur la platine en question peuvent présenter un diamètre important, générant de fait, en raison en outre de leur relative rigidité, une forte pression ou stress s'exerçant sur la platine, induisant l'éjection de cette dernière en direction de l'extérieur de l'armoire, et donc corollairement, une certaine difficulté à réintroduire la platine au sein de l'armoire, ce qui rend délicates les opérations de maintenance à réaliser.

Il a donc été mis au point un système de verrouillage du déplacement d'une telle platine, afin de contrer la poussée desdits câbles électriques et de permettre ainsi aux techniciens d'intervenir au niveau des composants électriques.

Selon l'invention, cette armoire électrique comprend au moins une platine destinée en premier lieu à recevoir des composants électriques, cette platine étant montée coulissante sur des rails de guidage latéraux solidaires d'une ossature interne à l'armoire, et notamment solidarisée à l'intérieur de l'armoire.

L'ossature comprend en outre des moyens de verrouillage du déplacement de ladite platine par rapport aux rails de guidage latéraux. Ce système de verrouillage comprend ainsi :
- un ensemble « glissière », constitué pour chaque platine de deux rails de guidage latéraux solidaires de l'ossature interne et de deux glissières solidaires de ladite platine ;
- un ensemble «blocage glissière », constitué d'au moins un levier de blocage apte à coopérer avec au moins l'une desdites glissières.

Les rails de guidage latéraux sont fixés sur l'ossature interne de l'armoire électrique et assurent le guidage en translation des glissières selon une direction horizontale.

Les glissières coopèrent avec les rails de guidage latéraux. Avantageusement, ces glissières sont usinées dans leur longueur de manière à former une crémaillère avec une denture oblique orientée selon un plan vertical, lesdites dents étant dirigées vers le haut ; alternativement, cette crémaillère est non pas usinée avec la glissière à laquelle elle est associée, mais est fixée sur cette glissière, par exemple au moyen de vis de forme adaptée à la configuration environnante.

Le ou les leviers de blocage, agencés de part et d'autre de l'ossature et positionnés sensiblement en zone antérieure de l'armoire, sont articulés en porte à faux sur l'ossature interne de l'armoire.

Chaque levier de blocage comprend, au niveau de son extrémité orientée en direction de l'intérieur de l'enceinte de l'armoire, un taquet venant se loger, par simple gravité, dans un cran quelconque défini par les dents de la crémaillère.

De manière avantageuse, la denture de la crémaillère, oblique selon le plan vertical, est orientée en direction de l'extérieur de l'armoire électrique. Ainsi, le ou les platines sont, par défaut, bloquées en ouverture, en raison de l'articulation en porte à faux du ou des leviers de blocage qui engendre la coopération du taquet dudit levier avec l'un des crans de la crémaillère. L'intervention manuelle est nécessaire pour désengager le ou les leviers de blocage hors de la ou des crémaillères, et ainsi permettre ainsi la translation de ladite platine en direction de l'extérieur de l'armoire.

Il s'ensuit que le temps et l'effort demandés lors des opérations de maintenance pour contrôler la poussée générée par les câbles électriques sur les composants, et donc sur les platines, sont amoindris.

Selon un mode avantageux de l'invention, les deux glissières d'une même patine comportent chacune un flasque vertical positionné en amont desdites glissières suivant leur ouverture. Les glissières présentent alors la forme d'un « T » renversé sur le côté. Ces flasques sont destinés à recevoir la platine orientée selon un plan vertical, perpendiculaire au plan horizontal dans lequel s'inscrit le déplacement en translation des glissières. Cette platine a pour vocation de séparer lesdits composants de la face avant de l'armoire, et ainsi optimiser les conditions de sécurité d'intervention des opérateurs de maintenance, générant ainsi une protection anti-contact. Par ailleurs, en raison du montage de ladite platine sur les glissières, elles-mêmes susceptibles de se déplacer le long des rails de guidage, l'opérateur a accès très facilement aux composants électriques sans nécessité d'un quelconque démontage, et notamment dévissage de ladite platine, favorisant son intervention et diminuant la durée de cette dernière.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 représente une vue schématique en perspective d'une armoire électrique ATEX conforme à l'invention, la paroi de face avant de l'armoire étant ouverte, donnant un aperçu des composants électriques confinés dans l'enceinte définie par ladite armoire.
La figure 2 représente une vue schématique de l'armoire de la figure 1, dans laquelle, par artifice, on a supprimé les parois définissant l'armoire.
La figure 3 est une vue en perspective de l'ossature de l'armoire de la figure 2, faisant apparaître les glissières et donc la platine-support de composants en position sortie hors de l'armoire.
La figure 4 est une vue schématique en éclaté de l'ensemble « glissière » de l'invention.
La figure 5 représente une vue schématique de face de l'ensemble « blocage glissière » selon différentes orientations.
La figure 6 représente une vue schématique en perspective de l'assemblage de l'ensemble « glissière » avec l'ensemble « blocage glissière ».
La figure 7 est une vue de détail de la coopération de l'ensemble « glissière » avec l'ensemble « blocage glissière ».
La figure 8 est une vue schématique latérale de l'assemblage de l'ensemble « glissière » avec l'ensemble « blocage glissière ».
La figure 9 est une représentation schématique latérale de l'ossature interne avec le dispositif de verrouillage du déplacement de la platine selon trois positions, respectivement en mode fermé, semi-ouvert et complètement ouvert.
La figure 10 représente une succession de vues illustrant schématiquement le fonctionnement du dispositif de verrouillage du déplacement des glissières.

### EXPOSE DETAILLE DE L'INVENTION

Fondamentalement, une armoire électrique (1) destinée aux milieux à risques comprend au moins une paroi supérieure (2), une paroi inférieure (3), une paroi de face (4), une paroi de fond (5) et deux parois latérales (6). Ces différentes parois sont d'une épaisseur suffisante pour permettre à l'armoire de remplir sa fonction essentielle ATEX. Cette armoire (1) accueille une ossature interne (7), c'est-à-dire une structure fixée au sein de l'armoire, au niveau de laquelle sont reçus différents composants électriques (8).

L'enceinte étanche (10) définie par les parois de l'armoire isole au moins une platine (9) faisant tout d'abord fonction de support de composants électriques (8). Selon l'invention, cette platine (9) n'est pas montée fixe sur l'ossature (7), mais est susceptible de se translater horizontalement hors de l'armoire. A cet effet, ladite platine est solidaire de deux glissières latérales, coopérant avec des traverses horizontales ou rails de guidage (15) de l'ossature (7).

Ce faisant, d'ores et déjà, on facilite de manière importante le positionnement des composants sur la platine. Dans la même idée, l'accessibilité résultant du déplacement potentiel de la ou des platines hors de l'armoire est significativement augmentée, de sorte que les opérations de serrage et de montage de composants avec des outils de serrage au couple sont grandement facilitées. De fait, on réduit la pénibilité des opérations de montage, puisqu'aussi bien, il devient possible de monter des sous-ensembles de composants en dehors de l'armoire, et non plus dans l'enceinte confinée définie par celle-ci. Cette accessibilité facilite également les opérations de maintenance, en raison de l'extraction quasiment intégrale rendue possible de la ou des platines hors de l'armoire, et permet de réduire de manière significative les durées d'intervention.

Lesdits composants peuvent être reliés à des câbles d'alimentation électriques (non représentés) susceptibles d'être acheminés à l'intérieur de l'armoire.

Le diamètre de ces câbles électriques est tel, qu'ils présentent une certaine rigidité générant, comme indiqué précédemment, une pression ou un stress sur le ou les platines (9). Lors des opérations de maintenance, cette pression constitue une gêne pour l'opérateur, notamment lorsque ce dernier tente de repositionner ladite platine à l'intérieur de l'enceinte, afin de pouvoir refermer l'armoire, ce qui augmente les temps de maintenance.

L'armoire (1) intègre donc un système de verrouillage (12) du déplacement des glissières sur lesquelles est (sont) solidarisée(s) la (les) platines (9).

Dans le mode de réalisation illustré au sein des figures, le système de verrouillage (12) présente un ensemble « glissière » (13) et un ensemble «blocage glissière» (14), tous deux avantageusement positionnés de part et d'autre de l'ossature interne (7).

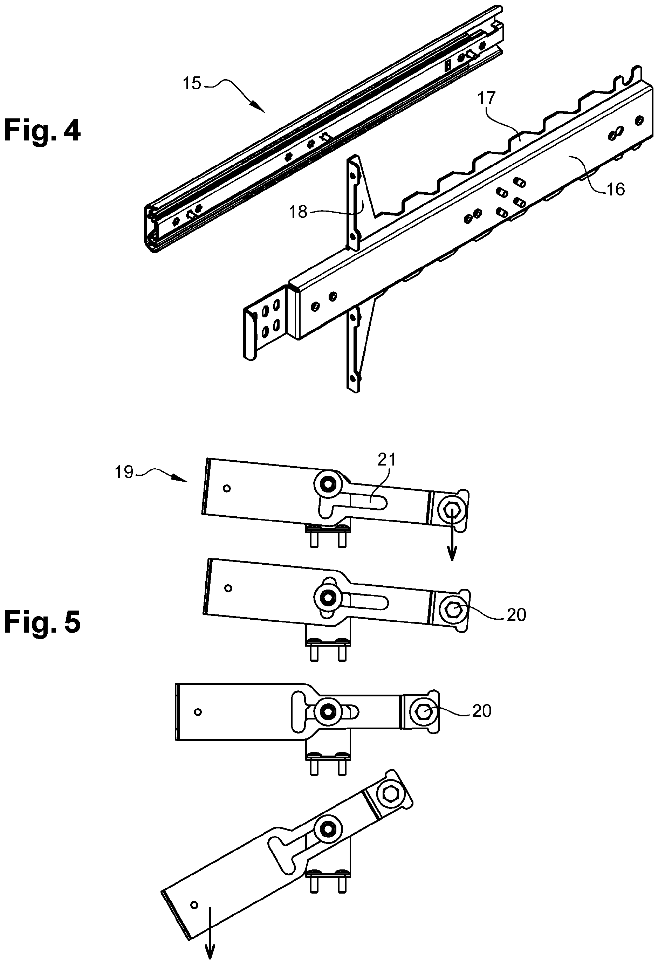

En référence à la figure 4, l'ensemble « glissière » (13) se compose d'un rail de guidage (15), vissé ou fixé (soudage) à ses extrémités sur l'ossature interne (7), et d'une glissière (16), solidaire de la platine (9). La glissière (16) est engagée dans le rail de guidage (15) de manière à pouvoir se translater suivant une direction horizontale.

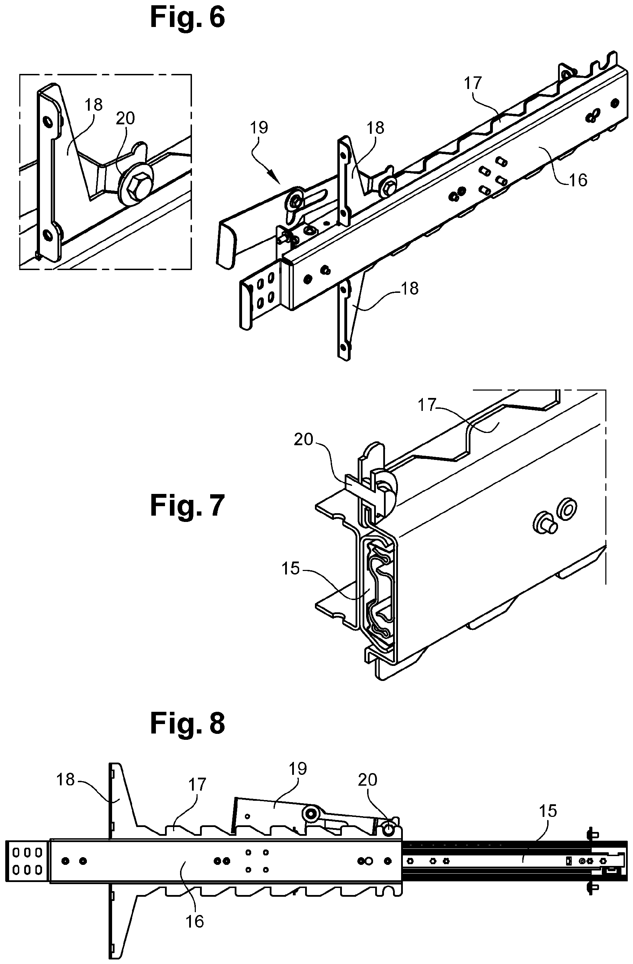

La glissière (16) est usinée sur sa longueur de manière à former, dans un premier temps, une crémaillère (17) avec une denture oblique selon le plan vertical puis, dans un second temps, un flasque (18) situé alors en amont de la glissière (16) suivant son ouverture, comme illustré sur les figures 4 et 6. Les glissières présentent alors la forme d'un « T » renversé sur le côté.

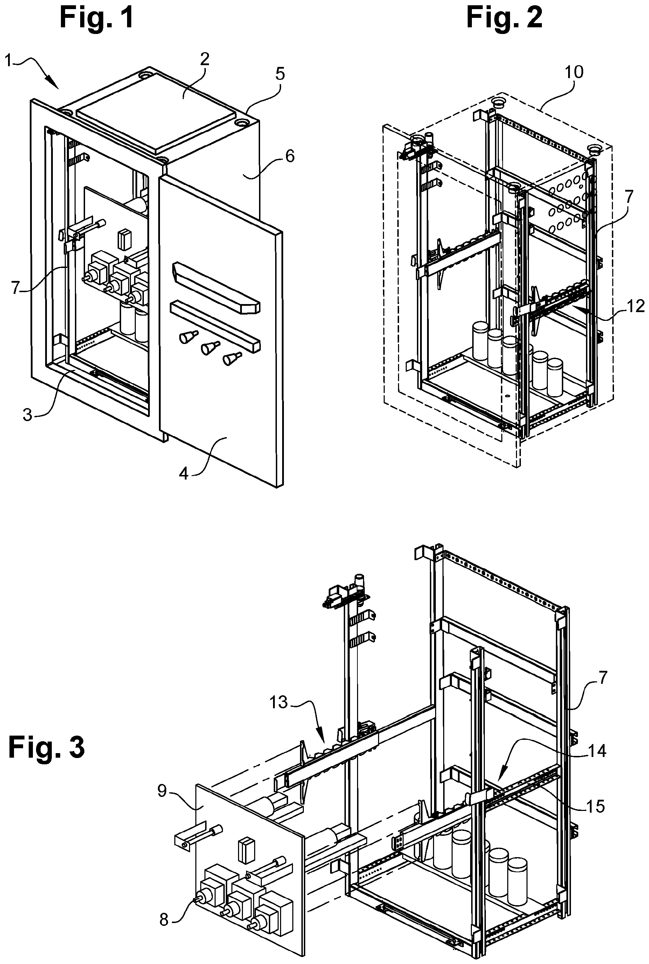

Comme cela est représenté figure 3, la platine (9) se visse sur les flasques (18). La platine (9) est alors solidaire de la glissière (16). Cette platine reçoit, comme déjà dit, des composants électriques de tous types, et par exemple des interrupteurs, écrans de visualisation, etc.

En référence à la figure 5, l'ensemble « blocage glissière » (14) est constitué d'un levier de blocage (19) articulé en porte à faux autour d'une vis, vissée sur l'ossature interne (7) (voir figures 2 et 3). En outre, un taquet (20) est vissé ou fixé sur l'extrémité libre du levier de blocage (19) orientée vers l'intérieur de l'enceinte de l'armoire (1).

Le taquet (20) est destiné à venir se loger dans un cran quelconque de la crémaillère par simple gravité. La denture oblique de la crémaillère (17) selon le plan vertical, est orientée vers l'extérieure de l'armoire (1) comme illustré sur les figures 4 et 6. La glissière (16), et donc la platine auquel elle est (ou elles sont) solidarisée sont donc bloqués en translation en direction de l'ouverture de l'armoire. En revanche, en raison de l'orientation desdites dents, ladite platine peut par simple pression être translatée en direction du fond de l'armoire.

Ainsi, lors d'une opération de maintenance sur l'armoire (1), une intervention manuelle est nécessaire pour désengager le levier de blocage (19) de la crémaillère (17). La glissière (16) et la platine (9) sont alors libres de se translater suivant une direction horizontale. En effet, le levier de blocage (19) peut être maintenu en position relevée aussi par gravité (voir figure 5), en raison du coulissement dudit levier dans la lumière (21) qu'il intègre. Le levier de blocage (19) peut de nouveau être basculé afin de loger le taquet (20) dans un cran de la crémaillère (17), et ainsi maintenir la glissière (16) et donc la platine (9) dans une position intermédiaire ; ou bien dans la position d'intervention, c'est-à-dire lorsque la platine (9) est complètement sortie de l'armoire (1).

En position d'intervention, comme illustré sur la figure 8, le levier de blocage (19) est logé dans un cran de la crémaillère (17) usinée de manière à empêcher toute translation de la glissière (16) suivant une direction horizontale. Pour le retour de la platine (9) au sein de l'armoire, le levier de blocage (19) est repositionné manuellement dans un cran quelconque de la crémaillère (17) dont l'orientation, comme déjà évoqué précédemment, autorise la rentrée de la platine (9) dans l'armoire (1) suivant la direction de fermeture.

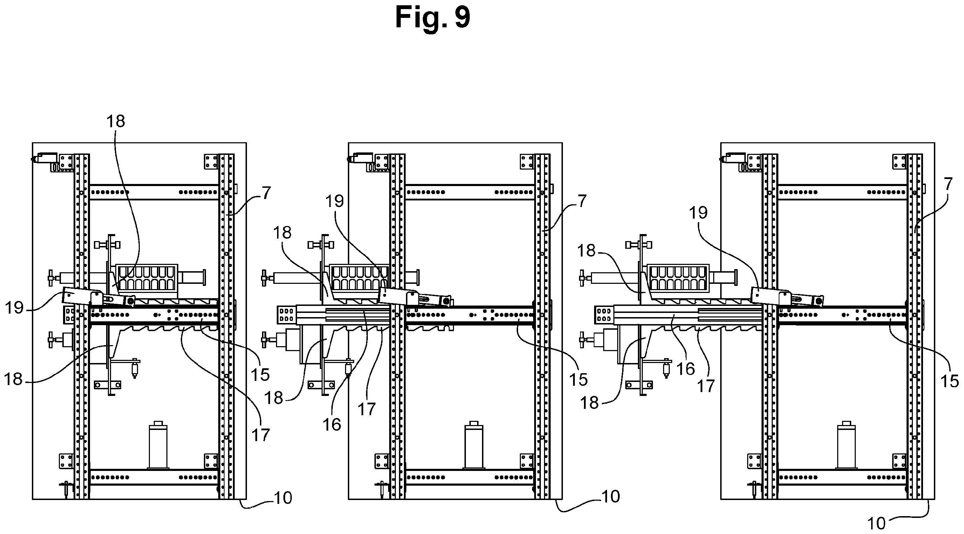

On a illustré au sein de la figure 9 trois positions de la platine (9) par rapport à l'ossature interne, montrant de manière plus explicite, le principe de l'invention.

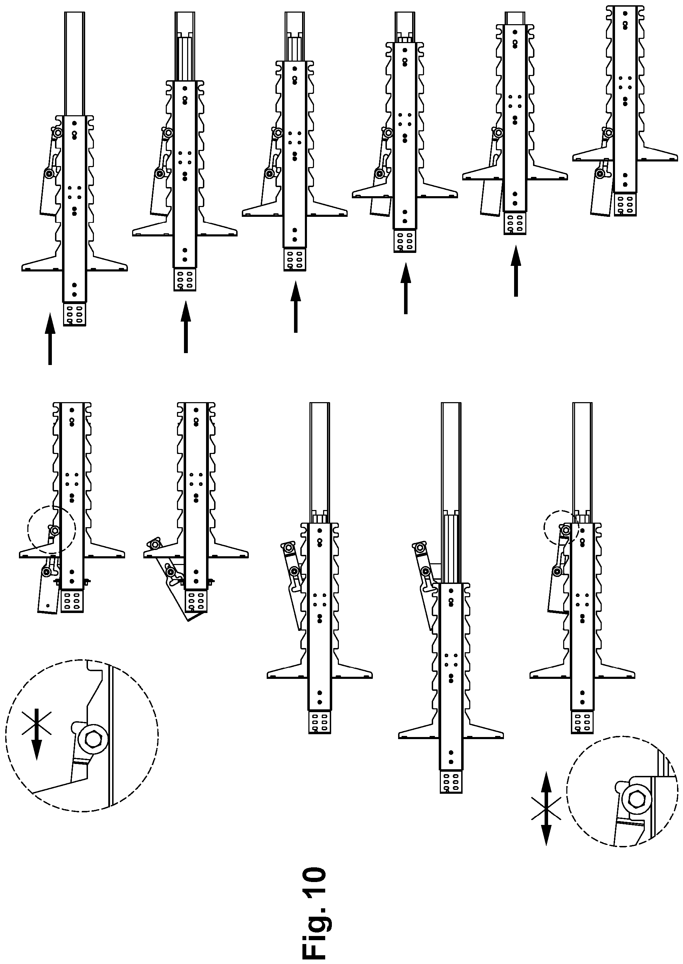

De la même manière, on a représenté sur la figure 10 les différentes configurations du levier de blocage en coopération avec la crémaillère.

On conçoit ainsi aisément que les opérations de montage et de maintenance des composants électriques (8) confinés dans l'armoire (1) sont facilitées en raison même de cette possibilité de déplacement de la ou des platines qui les reçoivent. Par ailleurs, en raison même de la présence des moyens de blocage, l'opérateur n'a plus à lutter contre la pression ou le stress généré sur lesdites platines, née du ou des câbles électriques aboutissant au sein de l'armoire.

Enfin, la sécurité générale est optimisée de par la présence d'une ou de plusieurs platines verticales, séparant les composants électriques de faible puissance des composants électriques de puissance élevée ou encore des bus bars électriques.

## Revendications

1. Armoire électrique (1) destinée aux milieux à risques, comprenant au moins une platine (9) destinée à recevoir des composants électriques, ladite platine étant montée sur une ossature interne (7) fixée au sein de l'armoire, **caractérisée en ce que** ladite au moins une platine (9) est montée coulissante sur des rails de guidage (15) solidaires de l'ossature interne (7), et **en ce que** l'armoire comprend en outre des moyens de verrouillage (17, 19) du déplacement de ladite platine (9), lesdits moyens de verrouillage du déplacement de la platine (9) étant constitués :
- d'une crémaillère (17) dont les dents sont dirigées vers le haut, solidarisée à une glissière (16), elle-même solidaire de la platine (9), ladite glissière coopérant en outre avec les rails de guidage (15) ;
- d'un levier de blocage (19) monté en porte à faux, articulé sur l'ossature interne (7), dont l'une des extrémités (20) coopère avec ladite crémaillère en l'absence de contrainte externe.

2. Armoire électrique selon la revendication 1, ***caractérisée* en ce que** la crémaillère (17) présente une denture oblique selon le plan vertical.

3. Armoire électrique selon l'une des revendications 1 et 2, ***caractérisée* en ce que** les glissières (16) comportent chacune un flasque vertical (18), positionné en amont desdites glissières, et destiné à recevoir la platine (9).

## Patentansprüche

1. Schaltschrank (1), bestimmt für gefährdete Umgebungen, mit mindestens einer Platine (9), bestimmt zur Aufnahme elektrischer Komponenten, diese Platine ist auf einem Innenrahmen (7) montiert, der innerhalb des Schaltschranks befestigt ist, ***dadurch gekennzeichnet, dass*** diese mindestens eine Platine (9) verschiebbar auf Führungsschienen (15) montiert ist; die fest mit dem Innenrahmen (7) verbunden sind und dass der Schaltschrank außerdem Mittel zur Verriegelung (17, 19) der Verschiebung dieser Platine (9) enthält, diese Mittel zur Verriegelung (17, 19) der Verschiebung der Platine (9) bestehen aus:
- einer Zahnstange (17); deren Zähne nach oben gerichtet sind, fest verbunden mit Gleitschiene (16), die wiederum fest mit der Platine (9) verbunden sind, diese Gleitschiene arbeitet außerdem mit den Führungsschienen (15) zusammen;
- einem Blockierhebel (19), freitragend montiert, über ein Gelenk am Innenrahmen (7) befestigt, dessen eines Endstück (20) mit dieser Zahnstange kooperiert, wenn keine externe Beanspruchung vorliegt.

2. Schaltschrank nach Anspruch 1, ***dadurch gekennzeichnet, dass*** die Zahnstange (17) eine schräge Verzahnung in vertikaler Ebene aufweist.

3. Schaltschrank nach einem der Ansprüche 1 und 2, ***dadurch gekennzeichnet, dass*** die Gleitschienen (16) jeweils einen vertikalen Flansch (18) enthalten, der oberhalb dieser Gleitschienen angeordnet und zur Aufnahme der Platine (9) bestimmt ist.

## Claims

1. Electrical cabinet (1) intended for areas exposed to risks, comprising at least a plate (9) acting as a support for electrical components, the said plate being mounted to an internal framework (7) attached inside the cabinet, **characterized in that** the said at least one plate (9) is mounted to slide on guide rails (15) forming an integral part of the internal framework (7) and **in that** the cabinet also comprises locking means (17, 19), preventing the movement of the said plate (9), the said locking means preventing the movement of the plate (9) being comprised of:
- a rack (17) the teeth of which are directed upwards, made integral with a slide (16), itself integral with the plate (9), the said slide also working together with the guide rails (15);
- a cantilevered locking lever (19), hinging on the internal framework (7), of which one end (20) works together with the said rack when there is no outside stress.

2. Electrical cabinet according to the claim 1, ***characterized in that*** the rack (17) has teeth placed at an oblique angle to the vertical plane.

3. Electrical cabinet according to one of the claims 1 and 2, ***characterized in that*** the slides (16) each comprise a vertical flange (18), placed upstream of the said slides, and designed to support the plate (9).
